# EUROPÄISCHE PATENTANMELDUNG

(11) **EP 0 535 523 A1**
(43) Veröffentlichungstag der Anmeldung: **07.04.1993**
(21) Anmeldenummer: 92116277.2
(22) Anmeldetag: 23.09.1992
(51) Int. Cl.: G02B 6/12, G02B 6/34

(54) **Integriert optischer Polarisationsteiler**

(30) Priorität: 02.10.1991 DE 4132835
(71) Anmelder: SIEMENS AKTIENGESELLSCHAFT, D-80333 München (DE)
(72) Erfinder: Sauer, Bernd, Dipl.-Ing., W-8050 Freising (DE); Müller, Gustav, Dr., W-8000 München 50 (DE); Stoll, Lothar, Dipl.-Phys., W-8000 München 70 (DE)

(57) **Zusammenfassung**

Ein integriert optischer Polarisationsteiler soll gegenüber einem bekannten, aus einem geraden optischen Richtkoppler aufgebauten integriert optischen Polarisationsteiler eine kürzere Baulänge aufweisen und geringere Anforderungen an Fertigungstoleranzen stellen. Dies wird erreicht durch Ausbildung des integriert optischen Polarisationsteilers in Form eines auf einem Substrat (1) integrierten, gekrümmt verlaufenden Rippenwellenleiters (2) mit einer wellenleitenden Schicht (20) und einer auf oder über der wellenleitenden Schicht (20) ausgebildeten, gekrümmt verlaufenden Rippe (21) mit zweistufigem Profil.

## Beschreibung

Die Erfindung betrifft einen integriert optischen Polarisationsteiler.

Mit derartigen integriert optischen Polarisationsteilern ist es möglich, gemischt polarisiertes Licht, das an einem Eingang des Polarisationsteilers eingespeist wird, in seine zwei voneinander unabhängigen transversal elektrisch (TE) und transversal magnetisch (TM) polarisierten Feldkomponenten zu separieren, wobei die beiden separierten elektromagnetischen Felder mit zueinander orthogonaler Polarisation an zwei räumlich getrennten Ausgängen des Polarisationsteilers verfügbar sind.

Derartige integriert optische Polarisationsteiler können mit optischen Richtkopplern realisiert werden.

Der im Anspruch 1 angegebenen Erfindung liegt die Aufgabe zugrunde, einen integriert optischen Polarisationsteiler anzugeben, der gegenüber einem aus einem geraden optischen Richtkoppler aufgebauten integriert optischen Polarisationsteiler eine kürzere Baulänge aufweist und geringere Anforderungen an Fertigungstoleranzen stellt.

Die Funktionsweise des erfindungsgemäßen integriert optischen Polarisationsteilers beruht auf der Polarisationsselektivität einer insbesondere gleichförmig gekrümmten optischen Wellenführung. Das gemischt polarisierte Licht wird an einem Ende des gekrümmt verlaufenden Rippenwellenleiters mit der zweistufigen Rippe eingekoppelt und an einem anderen stirnseitigen Ende des Rippenwellenleiters werden die beiden zueinander orthogonalen Polarisationsrichtungen räumlich getrennt voneinander ausgekoppelt, wobei eine Stufe der zweistufigen Rippe zwischen den beiden voneinander getrennt angekoppelten Polarisationsrichtungen liegt.

Die Realisierung des erfindungsgemäßen Polarisationsteilers kann in Gläsern, Halbleitern oder organischen Materialien erfolgen.

Der erfindungsgemäße Polarisationsteiler kann in III-V-Halbleitermaterialien auf GaAs- oder InP-Basis realisiert werden, wobei die zweistufige Rippe durch epitaktisches Aufwachsen einer vertikalen Schichtfolge erzeugt und die laterale Strukturierung der zweistufigen Rippe durch Naß- oder Trockenätzprozesse erfolgen kann.

Eine Realisierung des erfindungsgemäßen Polarisationsteilers in Gläsern ist beispielsweise mit Hilfe der Materialzusammensetzung SiO₂-Al₂O₃ möglich. Der Rippenwellenleiter kann hier vertikal durch Aufsputtern der jeweiligen Schichtenfolge auf das Substrat erzeugt werden. Als Substrat ist ein oxidierter Siliziumwafer geeignet.

Die Wellenlängen, mit denen der erfindungsgemäße Polarisationsteiler betrieben wird, liegen im optischen Bereich.

Der erfindungsgemäße Polarisationsteiler weist folgende Vorteile auf:
Er ist mit einer der Länge des gekrümmt verlaufenden Rippenwellenleiters entsprechender Baulänge realisierbar, die gegenüber der Baulänge eines mit einem geraden integriert optischen Richtkopplers bei gleicher Schichtfolge und gleiche Geometrieparametern (Polarisationsseparation und Rippenhöhe bei G. Müller, L. Stoll, G. Schulte-Roth, U. Wolff "Low current plasma effect optical switch an InP", IEE Electron. Lett. 1990, Vol. 26, S.115-116) realisierten integriert optischen Polarisationsteiler nur etwa ein Drittel beträgt. Damit lassen sich mit dem erfindungsgemäßen Polarisationsteiler kleinere integriert optische Schaltkreise realisieren.

Das Bauelement ist rein passiv, d.h. es sind keine aufwendigen Kontaktierungen von Wellenleitern erforderlich, wie dies beispielsweise im Falle von Ti-LiNbO₃-y-Verzweigern (siehe J.Finak, G.L. Yip "An Optical TE-TM mode splitter and modulator using a Ti-LiNbO₃Y - junction waveguide", 4. intern. Conf. on Int. Optics and Optical fiber Commm., Tokio, 1983, Poster Session 29D3-5), welche die Polarisation mit Hilfe des elektrooptischen Effektes trennen, der Fall ist.

Der gekrümmt verlaufende Rippenwellenleiter mit der zweistufigen Rippe des erfindungsgemäßen Polarisationsteilers kann aus der gleichen vertikalen Schichtzusammensetzung wie ein an die stirnseitigen Enden angeschlossener Ein- und/oder Auskoppelwellenleiter bestehen, so daß der erfindungsgemäße Polarisationsteiler und die Ein- und Auskoppelwellenleiter in nur zwei Ätzschritten lateral strukturiert werden kann. Konventionelle kurze optische Richtkoppler dagegen benötigen beispielsweise eine Goldschicht im Koppelbereich (siehe P.Albrecht, M. Hamacher, H. Heidrich, D. Hoffmann, H.-P.Nolting, C.M. Weinert "TE/TM mode splitters on InGaAsP/InP", IEEE Photonics Techn. Lett. 1990, Vol. 2, S. 114-115).

Zur Trennung der beiden Polarisationsrichtungen muß die Bogenlänge nur einer Stufe der zweistufigen Rippe auf nur einer Seite der Rippe eingestellt werden. Dadurch erhöht sich die Zahl der freien Parameter zur Optimierung des Bauelements.

Die Einstellung der Länge des gekrümmt verlaufenden Rippenwellenleiters kann bei vorgegebenem Material und vorgegebenen Geometrieparametern durch den Krümmungsradius des gekrümmt verlaufenden Rippenwellenleiters festgelegt werden. Dabei ist der Krümmungsradius zur unkritischen Abstimmung des Bauelements geeignet.

Der erfindungsgemäße Polarisationsteiler läßt sich sowohl so dimensionieren, daß der TE-Mode überkoppelt und der TM-Mode den Rippenwellenleiter ungestört durchläuft, als auch so, daß der TM-Mode überkoppelt und der TE-Mode den Rippenwellenleiter ungestört durchläuft.

Die Erfindung wird anhand der Figuren in der nachfolgenden Beschreibung näher erläutert. Es zeigen:
- Figur 1: in einer perspektivischen Prinzipdarstellung den gekrümmt verlaufenden Rippenwellenleiter mit der zweistufigen Rippe des erfindungsgemäßen Polarisationsteilers,
- Figur 2: ausschnitthaft einen Querschnitt durch den Rippenwellenleiter mit zweisufiger Rippe eines konkreten Ausführungsbeispiels des erfindungsgemäßen Polarisationsteilers, und
- Figur 3: in perspektivischer Darstellung das Ausführungsbeispiel des erfindungsgemäßen Polarisationsteilers.

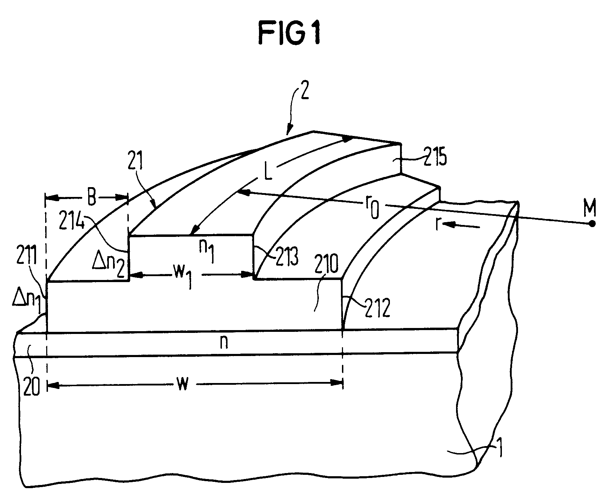

In der Figur 1 ist das Substrat mit 1 bezeichnet. Unter der Oberfläche 10 dieses Substrats 1 ist eine flächenartige wellenleitende Schicht 20 ausgebildet. Auf der Oberfläche 10 ist über der wellenleitenden Schicht 20 eine gleichmäßig gekrümmt verlaufende Rippe 21 mit zweistufigem Profil ausgebildet, die zusammen mit der wellenleitenden Schicht 20 den gekrümmt verlaufenden Wellenleiter 2 definiert.

Die Rippe 21 mit zweistufigem Profil weist eine untere erste Stufe 210 mit einer vom Krümmungsmittelpunkt der gekrümmt verlaufenden Rippe 21 abgekehrten Außenkante 211 und einer diesem Krümmungsmittelpunkt M zugekehrten Innenkante 212 und einer Breite W zwischen der Außenkante 211 und der Innenkante 212 sowie eine auf der ersten Stufe aufgebrachten zweiten Stufe 213 mit einer vom Krümmungsmittelpunkt abgekehrten Außenkante 214 und einer diesem Krümmungsmittelpunkt zugekehrten Innenkante 215 auf, wobei die Außenkante 214 der zweiten Rippe 213 in radialer Richtung r einen Abstand B von der Außenkante 211 der ersten Stufe 210 aufweist.

Wählt man die Brechzahlsprünge n₁ und n₂ an den Außenkanten 211 und 214 der ersten und zweiten Stufe 210 bzw. 213 und die Breite W der ersten Stufe ausreichend groß, wird die Wellenführung im Rippenwellenleiter 2 durch diese Außenkanten 211 und 214 der Rippe 21 allein bestimmt. Der Einfluß der zwei Innenkanten 212 und 215 der Rippe 21 kann in diesem Fall vernachlässigt werden. Als Dimensionierungsanleitung kann gelten: (Δn₁)²+(Δn₂)² ist sehr groß gegenüber n₁²-β² gewählt und die Breite W der ersten Stufe 210 ist größer als r₀-(β/n₁k₀) wobei n₁ die Brechzahl des Materials der zweiten Stufe 213, β die Phasenkonstante einer Gesamtfeldverteilung des im Wellenleiter geführten Lichts k₀ = 2 π/λ die Vakuumwellenzahl und r₀ den Krümmungsradius des Rippenwellenleiters 2 bedeutet.

Wegen des großen effektiven Brechzahlsprungs an den Außenkanten 211 und 214 der Rippe 21 ist der Strahlungsverlust der Wellenführung an diesen Außenkanten 211 und 214 zu vernachlässigen.

Durch Variation des Krümmungsradius r₀ des radialen Abstandes B zwischen den Außenkanten 211 und 214 und des Brechzahlsprunges Δn₁ kann beispielsweise bei konstantem Δn₁+Δn₂ eine Polarisationsteilerkonfiguration durch zwei Brechzahlüberhöhungen an den Außenkanten 211 und 214 für eine Polarisationsrichtung, beispielsweise die TE-Polarisation eingestellt werden. Die Bogenlänge L des Rippenwellenleiters 2 läßt sich näherungsweise zu r₀/(β₀-β₁) berechnen, wobei β₀ und β₁ die Phasenkonstante eines im Wellenleiter 2 geführten nullten und ersten Supermodes ist.

Ein bei den Innenkanten 212 und 215 des Ripenwellenleiters 2 eingekoppelter Wellenleitermode wird nach Ausbreitung über die Bogenlänge bei den Außenkanten 211 und 214 des Rippenwellenleiters 2 austreten. Für die andere Polarisationsrichtung, im Beispiel die TM-Polarisation, ist der Rippenwellenleiter 2 wegen anderer effektiver Brechzahlen für diese Polarisationsrichtung verstimmt, d.h. es findet keine Überkopplung von Licht zwischen den Außenkanten 214 und 211 der Rippe 21 mit zweistufigem Profil statt.

Demnach lassen sich mit dem gekrümmten Rippenwellenleiter 2 elektromagnetische Felder unterschiedlicher Polarisationsrichtung räumlich auf eine Distanz trennen, die durch den Abstand B zwischen den beiden Außenkanten 211 und 214 der Rippe 21 mit zweistufigem Profil bestimmt ist.

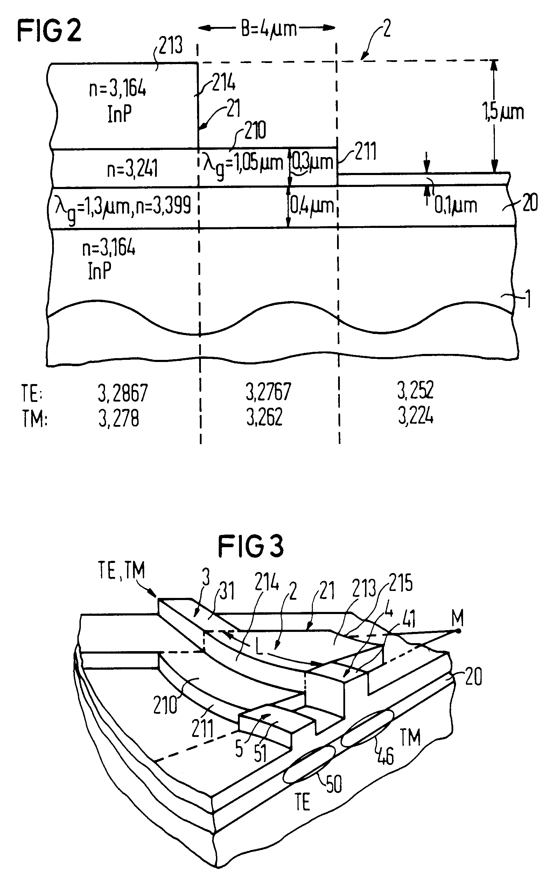

Bei dem konkreten Ausführungsbeispiel nach Figur 2 besteht das Substrat aus InP mit einer Brechzahl n = 3,164. Die wellenleitende Schicht 20 besteht aus GaInAsP mit einer Gap-Wellenlänge λ_{g} = 1,3 µm und einer Brechzahl n = 3,399. Auf der wellenleitenden Schicht 20 ist eine Ätzstoppschicht aus GaInAsP mit einer Gap-Wellenlänge λ_{g} = 1,05µm und einer Brechzahl n von 3,241 aufgebracht, welche die erste Stufe 210 mit der Außenkante 211 definiert. Dazu hat die Ätzstoppschicht im Bereich der ersten Stufe 210 beispielsweise eine Dicke von 0,3 µm, während sie außerhalb des Bereiches der Stufe 210 nur eine Dicke von 0,1 µm aufweist.

Auf der Ätzstoppschicht ist im Bereich der Rippe 210 eine Schicht aus InP mit der Brechzahl n = 3,164 aufgebracht, welche beispielsweise eine Dicke von 1,3 µm aufweist und die zweite Stufe 213 der Rippe 21 mit zweistufigem Profil definiert. Der radiale Abstand B zwischen der Außenkante 214 und der Außenkante 211 der Rippe 21 ist beispielsweise 4 µm gewählt. Der Krümmungsradius r₀ des Rippenwellenleiters 2 beträgt beispielsweise 1,1 mm und seine Bogenlänge L beträgt mindestens 300 µm.

Mit dem derart bemessenen Rippenwellenleiter lassen sich die TE- und TM-Polarisation gemischt polarisierten Lichts der Wellenlänge λ = 1,55 µm räumlich voneinander trennen, wobei das TM-polarisierte Licht im wesentlichen ungestört im Wellenleiter 2 geführt wird, während das TE-polarisierte Licht zur Außenkante 211 der ersten Stufe 210 der Rippe 21 überkoppelt. Zur vollständigen Überkopplung ist mindestens die Bogenlänge L = 300 µm des gekrümmten Rippenwellenleiters 2 erforderlich.

Die wellenleitende Schicht 2 aus GaInAsP der Dicke 0,4 µm, die Ätzstoppschicht aus GaInAsP und die darauf aufgebrachte Schicht aus InP lassen sich auf einfache Weise epitaktisch herstellen. Die im Beispiel nach Figur 2 angegebenen Ätztiefen sind nach den oben angegebenen Regeln ausgewählt, die übrigen Parameter entsprechen typischen Abmessungen der integrierten Optik.

In der Figur 2 sind auch die effektive Brechzahl n_{eff} für das TE-polarisierte und das TM-polarisierte Licht im Bereich unter der zweiten Stufe 213, im Bereich zwischen der Außenkante 214 der zweiten Stufe 213 und der Außenkante 211 der ersten Stufe 210 sowie außerhalb der Rippe 21 mit zweistufigem Profil angegeben.

Die Figur 3 zeigt das Ausführungsbeispiel nach Figur 2, wobei an den gekrümmten Rippenwellenleiter 2 mit der Rippe 21 mit zweistufigem Profil an einer eingangsseitigen Stirnfläche 23 ein Einkoppelwellenleiter 3 und an einer ausgangsseitigen Stirnfläche 24 des Rippenwellenleiters 2 zwei Auskoppelwellenleiter 4 und 5 angekoppelt sind, wobei ein Auskoppelwellenleiter 4 im Bereich der zweiten Stufe 213 angekoppelt ist und zum Auskoppeln des TM-polarisierten Lichts dient, während der andere Auskoppelwellenleiter 5 im Bereich der ersten Stufe 210 angekoppelt ist und zum Auskoppeln des vom TM-polarisierten Licht räumlich getrennten TE-polarisierten Lichts dient.

Der Einkoppelwellenleiter 3 ist durch eine in der Ebene der zweiten Stufe 213 ausgebildete Rippe 31 definiert. Der Auskoppelwellenleiter 4 ist auf ähnliche Weise durch eine in der Ebene der zweiten Stufe 213 ausgebildete Rippe 41 definiert. Der Auskoppelwellenleiter 5 ist durch eine in der Ebene der ersten Stufe 210 ausgebildete Rippe 51 definiert. Die Feldverteilung des im Auskoppelwellenleiter 4 geführten TM-polarisierten Lichts ist durch den Bereich 40 angedeutet, während die Feldverteilung des im Auskoppelwellenleiter 5 geführten TE-polarisierten Lichts durch den Bereich 50 angedeutet ist. Die Breite der Rippen 31, 41 bzw. 51 kann im Vergleich zu B = 4 µm beispeilsweise 2 µm sein.

## Patentansprüche

1. Integriert optischer Polarisationsteiler, **gekennzeichnet durch** einen auf einem Substrat (1) integrierten, gekrümmt verlaufenden Rippenwellenleiter (2) mit einer wellenleitenden Schicht (20) und einer auf oder über der wellenleitenden Schicht (20) ausgebildeten, gekrümmt verlaufenden Rippe (21) mit zwei zweistufigem Profil.
